# EUROPEAN PATENT APPLICATION

(11) **EP 4 641 140 A1**
(43) Date of publication of application: **29.10.2025**
(21) Application number: 22969191.0
(22) Date of filing: 21.12.2022
(51) Int. Cl.: G01C 21/26

(54) **TRAVEL PATH GENERATION DEVICE**

(71) Applicant: Astemo, Ltd., Tokyo 100-0004 (JP)
(72) Inventor: ANDO, Koichi, Hitachinaka-shi, Ibaraki 312-8503 (JP); AMPO, Keisuke, Hitachinaka-shi, Ibaraki 312-8503 (JP)
(74) Representative: MERH-IP Matias Erny Reichl Hoffmann Patentanwälte PartG mbB
(86) International application number: PCT/JP2022/047147
(87) International publication number: WO 2024/134804

(57) **Abstract**

An object is to generate a safe travel path that enables hands-off travel in a non-lane section. A travel path generation device 10 includes a map storage unit 12 that stores map information, a section determination unit 13 that determines, based on the map information, a non-lane section in which a plurality of lanes L are not divided and a lane section in which a plurality of lanes L are divided, and a path generation unit 11 that generates a travel path of a vehicle **1.** The section determination unit 13 determines one lane section, a non-lane section located ahead in a traveling direction of the vehicle 1 with respect to the one lane section, and another lane section located ahead in the traveling direction of the vehicle 1 with respect to the non-lane section. The path generation unit 11 calculates the number of intersections with other lane links in each of a plurality of lane links connecting each lane L of one lane section and each lane L of another lane section. The path generation unit 11 generates a travel path 70 in the non-lane section based on the calculated number of intersections.

## Description

### Technical Field

The present invention relates to a travel path generation device.

### Background Art

A tollgate or the like installed on a toll road is provided with a non-lane section which is a road section in which a plurality of lanes in which traveling directions of vehicles are the same are not divided. Since a lane division line is not indicated in a non-lane section, in a vehicle control system that recognizes the lane division line and performs driving assistance, automatic driving, or the like, hands-off travel is set to be disabled in the non-lane section in many cases. However, if the hands-off travel can be safely continued even in a non-lane section in the same manner as that in a lane section which is a road section in which a plurality of lanes are divided, this leads to improvement of passenger comfort.

Examples of the prior art in this field include PTL 1. In a case where there is a tollgate ahead in a traveling direction of a vehicle during execution of automatic driving assistance related to lane keeping travel, an automatic driving assistance device disclosed in PTL 1 specifies, on the front side of the tollgate, a lane division line disappearing point that is a point where either one of left and right lane dividing lines disappears and a road widening point that is a point where the width of a lane on which the vehicle travels widens. Then, in the automatic driving assistance device disclosed in PTL 1, either the lane division line disappearing point or the road widening point is set as a change point where the control content of the automatic driving assistance related to the lane keeping travel is changed or an end point where the control is ended.

### Citation List

### Patent Literature

PTL 1: JP 2017-159723 A

### Summary of Invention

### Technical Problem

However, the automatic driving assistance device disclosed in PTL 1 can only provide automatic driving assistance up to a road widening point or a lane division line disappearing point, and cannot provide automatic driving assistance for all sections of a tollgate including a non-lane section.

The present invention has been made in view of the above circumstances, and an object thereof is to generate a safe travel path that enables hands-off travel in a non-lane section.

### Solution to Problem

In order to solve the above problem, according to the present invention, a travel path generation device includes a map storage unit that stores map information for distinguishing a plurality of lanes in which traveling directions of vehicles are the same, a section determination unit that determines, based on the map information, a non-lane section that is a road section in which the plurality of lanes are not divided and a lane section that is a road section in which the plurality of lanes are divided, and a path generation unit that generates a travel path of the vehicle. The section determination unit determines one lane section, the non-lane section located ahead in a traveling direction with respect to the one lane section, and another lane section located ahead in the traveling direction with respect to the non-lane section. The path generation unit calculates the number of intersections with other lane links in each of a plurality of lane links connecting each lane of the one lane section and each lane of the other lane section, and generates the travel path in the non-lane section based on the calculated number of intersections.

### Advantageous Effects of Invention

According to the present invention, it is possible to generate a safe travel path that enables hands-off travel in a non-lane section.

Problems, configurations, and effects other than those described above will be clarified by the following description of embodiments.

### Brief Description of Drawings

[FIG. 1] FIG. 1 is a diagram illustrating a configuration of a vehicle on which a travel path generation device in the present embodiment is mounted.
[FIG. 2] FIG. 2 is a diagram for describing an operation example of a path generation unit and a section determination unit.
[FIG. 3] FIG. 3 is a diagram for describing another operation example of the path generation unit and the section determination unit.
[FIG. 4] FIG. 4 is a flowchart illustrating travel path generation processing in a non-lane section.
[FIG. 5] FIG. 5 is a diagram for describing an operation example of the path generation unit and the section determination unit in a case where a travel path is generated in consideration of an automated gate.
[FIG. 6] FIG. 6 is a diagram for describing an operation example of the path generation unit and the section determination unit performed subsequently to FIG. 5.
[FIG. 7] FIG. 7 is a flowchart illustrating processing of storing position information of an automated gate.
[FIG. 8] FIG. 8 is a flowchart illustrating correction processing of a travel path in a case where the travel path is generated in consideration of the automated gate.

### Description of Embodiments

Hereinafter, embodiments of the present invention will be described with reference to the drawings. Note that components denoted by the same reference signs in the respective embodiments have the same functions in the respective embodiments, and the description thereof will be omitted unless otherwise specified.

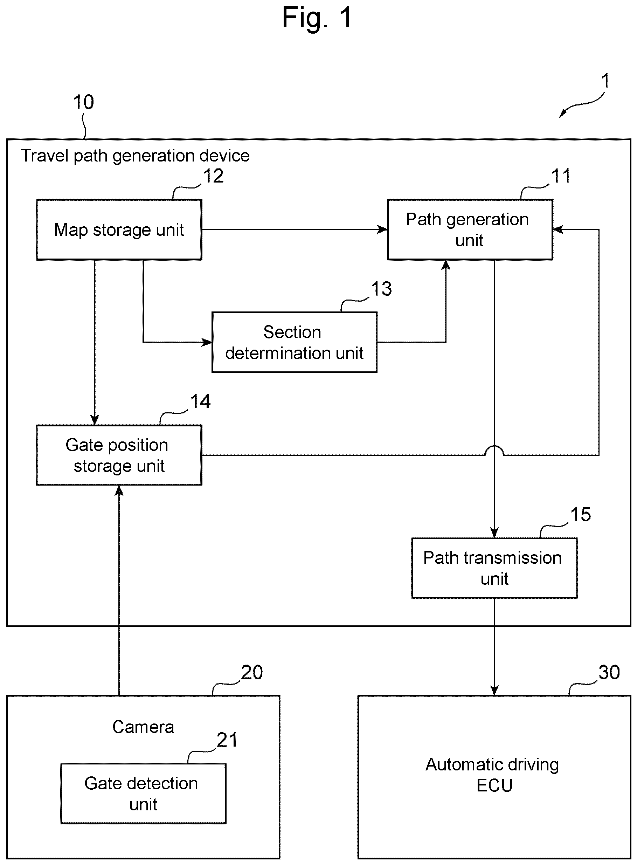

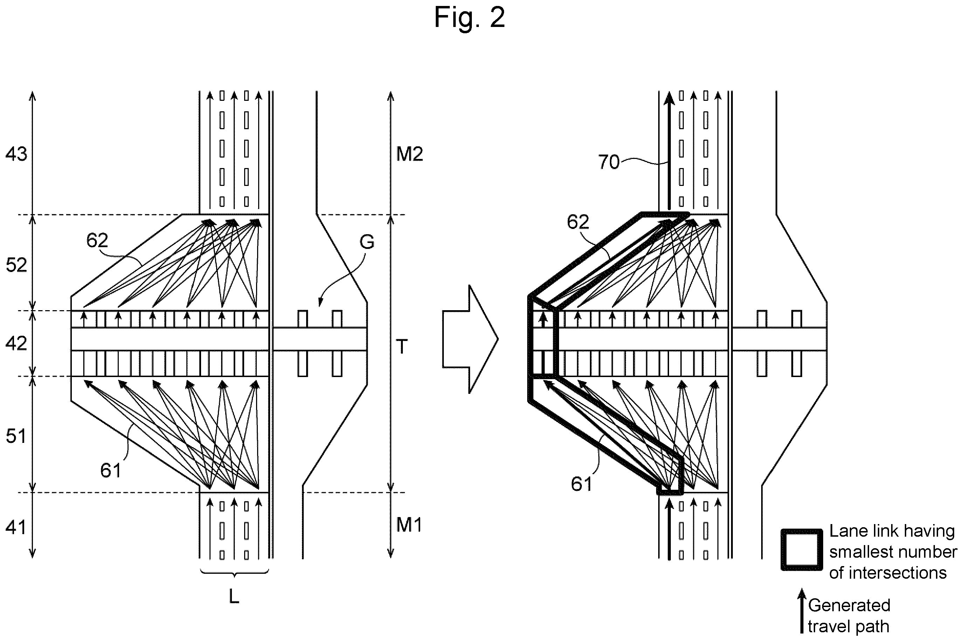

FIG. 1 is a diagram illustrating a configuration of a vehicle 1 on which a travel path generation device 10 in the present embodiment is mounted. FIG. 2 is a diagram for describing an operation example of a path generation unit 11 and a section determination unit 13.

The vehicle 1 includes the travel path generation device 10, a camera 20, and an automatic driving ECU 30, as a vehicle control system. The travel path generation device 10, the camera 20, and the automatic driving ECU 30 are communicably connected to each other via an in-vehicle network of the vehicle 1.

The travel path generation device 10 generates a travel path of the vehicle 1 and transmits the travel path to the automatic driving ECU 30. The travel path generation device 10 includes, for example, a map positioning unit (MPU). The travel path generation device 10 includes a path generation unit 11, a map storage unit 12, a section determination unit 13, a gate position storage unit 14, and a path transmission unit 15.

The map storage unit 12 stores map information for distinguishing a plurality of lanes in which the traveling directions of the vehicles are the same. The map information stored in the map storage unit 12 may be high-precision three-dimensional map information that stores road network data of a lane level. The map storage unit 12 transmits appropriate map information in response to a transmission request of map information from the path generation unit 11 or the section determination unit 13.

The section determination unit 13 determines a non-lane section and a lane section included in the map information transmitted from the map storage unit 12, and transmits a determination result to the path generation unit 11. The non-lane section is a road section in which a plurality of lanes L in which the traveling directions of the vehicle 1 are the same are not divided. The lane section is a road section in which a plurality of lanes L in which the traveling directions of the vehicle 1 are the same are divided. In particular, the section determination unit 13 determines one lane section that is a lane section in which the vehicle 1 is traveling or a lane section closest to the vehicle 1 ahead in the traveling direction, a non-lane section located ahead in the traveling direction of the vehicle 1 with respect to the one lane section, and another lane section located ahead in the traveling direction of the vehicle 1 with respect to the non-lane section.

FIG. 2 illustrates a road section near a tollgate T of a toll road. The traveling direction of the vehicle 1 in FIG. 2 is a direction from the bottom to the top of the surface of paper. A plurality of gates G are installed in the tollgate T in many cases. The plurality of gates G is a lane section in which a plurality of lanes L are divided. In the tollgate T, the front side of the gate G (the rear side in the traveling direction of the vehicle 1 with respect to the gate G) and an opposite side of the gate G (the front side in the traveling direction of the vehicle 1 with respect to the gate G) are the non-lane sections in many cases. Main lines M1 and M2 on the front side and the opposite side of the tollgate T are a lane section in which a plurality of lanes L in which the traveling directions of the vehicles 1 are the same are divided.

As illustrated in FIG. 2, in a case where a plurality of non-lane sections and a plurality of lane sections are alternately arranged in the traveling direction of the vehicle 1, the section determination unit 13 determines the non-lane section and the lane section as follows. That is, the section determination unit 13 determines a lane section in which the vehicle 1 is traveling or a closest lane section ahead in the traveling direction of the vehicle 1 as a first lane section 41. The section determination unit 13 determines a non-lane section located ahead in the traveling direction of the vehicle 1 with respect to the first lane section 41 as a first non-lane section 51. The section determination unit 13 determines a lane section located ahead in the traveling direction of the vehicle 1 with respect to the first non-lane section 51 as a second lane section 42. The section determination unit 13 determines a non-lane section located ahead in the traveling direction of the vehicle 1 with respect to the second lane section 42 as a second non-lane section 52. The section determination unit 13 determines a lane section located ahead in the traveling direction of the vehicle 1 with respect to the second non-lane section 52 as a third lane section 43.

In the example of FIG. 2, the section determination unit 13 can determine the main line M1 on the front side of the tollgate T as the first lane section 41 and determine the non-lane section on the front side of the gate G as the first non-lane section 51. Further, the section determination unit 13 can determine the gate G as the second lane section 42, determine the non-lane section on the opposite side of the gate G as the second non-lane section 52, and determine the main line M2 on the opposite side of the tollgate T as the third lane section 43.

Note that even in a case where there is the non-lane section on either the front side or the opposite side of the gate G, the section determination unit 13 can determine the non-lane section and the lane section. For example, in a case where there is a non-lane section only on the opposite side of the gate G, the section determination unit 13 can determine the main line M1 and the gate G on the front side of the gate G as one lane section, and determine the main line M2 on the opposite side of the gate G as another lane section. For example, in a case where there is a non-lane section only on the front side of the gate G, the section determination unit 13 can determine the main line M1 on the front side of the gate G as one lane section and determine the gate G and the main line M2 on the opposite side of the gate G as the other lane section.

The path generation unit 11 generates a travel path 70 of the vehicle 1 based on the map information transmitted from the map storage unit 12 and the determination result of the section determination unit 13. In particular, the path generation unit 11 generates the travel path 70 in the non-lane section. Specifically, the path generation unit 11 calculates a plurality of lane links connecting each lane L of one lane section and each lane L of the other lane section. The plurality of lane links connecting each of the lanes L in one lane section and each of the lanes L in the other lane section may be a plurality of line segments linearly connecting each of the lanes L in one lane section and each of the lanes L in the other lane section in a round-robin manner. The plurality of lane links connecting each lane L of one lane section and each lane L of the other lane section may be candidates for a virtual lane that can be the travel path 70 of the vehicle 1 in a non-lane section located between the one lane section and the other lane section. The path generation unit 11 calculates the number of intersections with other lane links in each of the plurality of calculated lane links. Then, based on the calculated number of intersections, the path generation unit 11 generates the travel path 70 in the non-lane section located between one lane section and the other lane section. Specifically, the path generation unit 11 specifies a lane link in which the calculated number of the intersections is the smallest, and generates the travel path 70 in the non-lane section in accordance with the specified lane link.

In the example of FIG. 2, the path generation unit 11 calculates the number of intersections with another first lane link 61 in each of a plurality of first lane links 61 connecting each lane L of the first lane section 41 and each lane L of the second lane section 42 (the plurality of gates G). Then, the path generation unit 11 generates the travel path 70 in the first non-lane section 51 in accordance with the first lane link 61 in which the calculated number of intersections is the smallest. Similarly, the path generation unit 11 calculates the number of intersections with another second lane link 62 in each of a plurality of second lane links 62 connecting each lane L of the second with lane section 42 (the plurality of gates G) and each lane L of the third with lane section 43. Then, the path generation unit 11 generates the travel path 70 in the second non-lane section 52 in accordance with the second lane link 62 in which the calculated number of intersections is the smallest. In this manner, the path generation unit 11 can generate the travel path 70 in the non-lane section. The path generation unit 11 transmits the generated travel path 70 to the path transmission unit 15.

Note that the lane link in which the number of intersections is the smallest tends to be a lane link located at the left end or the right end of the non-lane section. Therefore, the path generation unit 11 may generate the travel path 70 to pass through the left end of the non-lane section in a case where a road including the non-lane section is left side traffic, and may generate the travel path 70 to pass through the right end of the non-lane section when the road including the non-lane section is right side traffic.

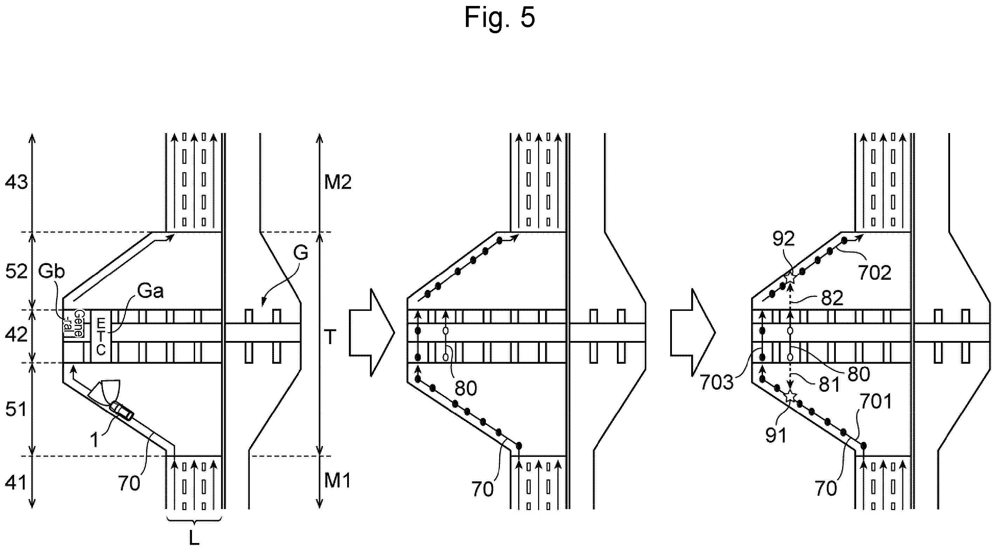

In addition, in the plurality of gates G installed in the tollgate T, there are at least two types of gates G: an automated gate Ga (ETC gate) in which the payment of the toll and the opening/closing operation of the gate G are automated; and a non-automated gate Gb (general gate) in which the payment of the toll or the opening/closing operation of the gate G is not automated. The path generation unit 11 can generate the travel path 70 in the non-lane section based on the lane link in which the number of intersections is the smallest and the position information of the automated gate Ga closest to the lane link. Details of a method of generating the travel path 70 in consideration of the automated gate Ga will be described later with reference to FIGS. 5 to 8.

The gate position storage unit 14 stores the position information of the automated gate Ga installed in the tollgate T. The position information of the automated gate Ga is acquired by a gate detection unit 21 of the camera 20. The gate detection unit 21 identifies the type of the gate G (the automated gate Ga or the non-automated gate Gb) from an image around the vehicle 1 acquired by the camera 20, and detects each position of the automated gate Ga and the non-automated gate Gb. At this time, the gate detection unit 21 detects the position of the automated gate Ga closest to the lane link in which the number of intersections is the smallest. The gate detection unit 21 transmits the position information of the automated gate Ga closest to the lane link in which the number of intersections is the smallest to the travel path generation device 10. The gate position storage unit 14 stores the position information of the automated gate Ga transmitted from the camera 20 in association with the map information transmitted from the map storage unit 12. The gate position storage unit 14 transmits the position information of the automated gate Ga associated with the map information to the path generation unit 11.

The path transmission unit 15 transmits the travel path 70 transmitted from the path generation unit 11 to the automatic driving ECU 30. The automatic driving ECU 30 controls the vehicle 1 such that the vehicle 1 autonomously travels in accordance with the travel path 70 transmitted from the travel path generation device 10.

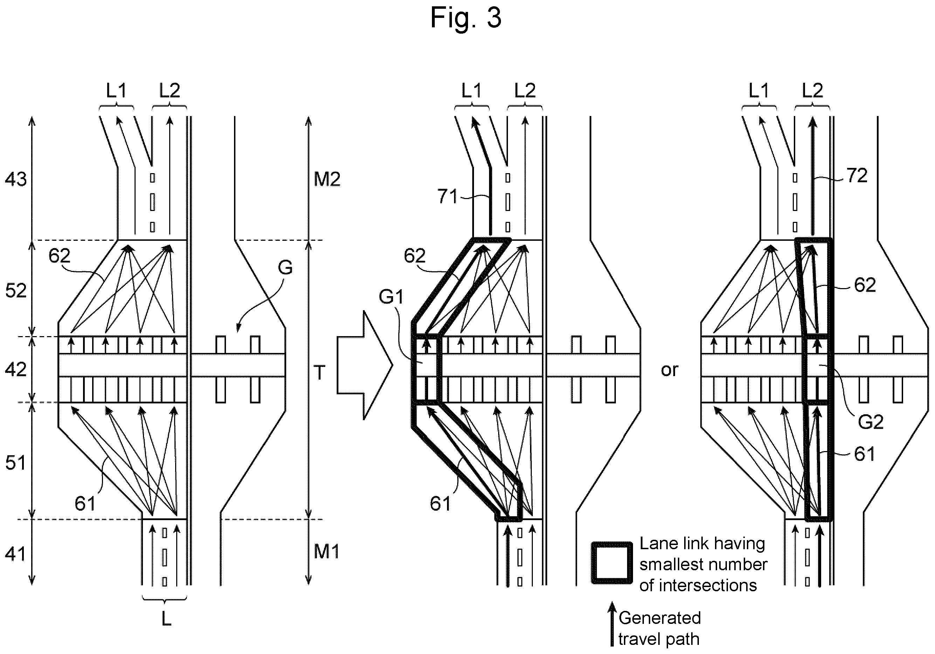

FIG. 3 is a diagram for describing another operation example of the path generation unit 11 and the section determination unit 13.

In the vehicle 1, a target lane on which the vehicle 1 is to travel in the other lane section may be determined in advance in accordance with the destination of the vehicle 1. In this case, the path generation unit 11 generates the travel path 70 in the non-lane section in accordance with the lane link in which the number of intersections is the smallest among a plurality of lane links connecting each lane of one lane section and the target lane.

FIG. 3 illustrates a road section in which the main line M2 on the opposite side of the tollgate T branches into a lane L1 and a lane L2. It is assumed that the target lane on which the vehicle 1 is to travel in the third lane section 43 is determined in advance to be the lane L1. In this case, in the example of FIG. 3, the path generation unit 11 generates the travel path 70 in the second non-lane section 52 in accordance with the second lane link 62 in which the number of intersections is the smallest among a plurality of second lane links 62 connecting each lane L of the gate G which is the second lane section 42 and the lane L1 which is the target lane. The travel path 70 in the second non-lane section 52 is generated in accordance with the second lane link 62 connecting the lane L1 which is the target lane and the gate G1. Further, the path generation unit 11 generates the travel path 70 in the first non-lane section 51 in accordance with the first lane link 61 in which the number of intersections is the smallest among a plurality of first lane links 61 connecting each lane L of the first lane section 41 and the gate G1 which is the target lane.

In addition, it is assumed that the target lane on which the vehicle 1 is to travel in the third lane section 43 is determined in advance to be the lane L2. In this case, in the example of FIG. 3, the path generation unit 11 generates the travel path 70 in the second non-lane section 52 in accordance with the second lane link 62 in which the number of intersections is the smallest among a plurality of second lane links 62 connecting each lane L of the gate G which is the second lane section 42 and the lane L2 which is the target lane. The travel path 70 in the second non-lane section 52 is generated in accordance with the second lane link 62 connecting the lane L2 which is the target lane and the gate G2. Further, the path generation unit 11 generates the travel path 70 in the first non-lane section 51 in accordance with the first lane link 61 in which the number of intersections is the smallest among a plurality of first lane links 61 connecting each lane L of the first lane section 41 and the gate G2 which is the target lane.

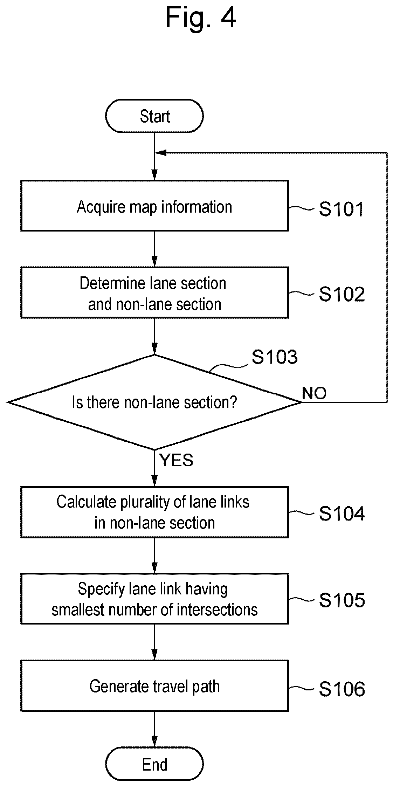

FIG. 4 is a flowchart illustrating generation processing of the travel path 70 in a non-lane section.

In Step S101, the path generation unit 11 and the section determination unit 13 acquire map information from the map storage unit 12.

In Step S102, the section determination unit 13 determines a non-lane section and a lane section included in the map information.

In Step S103, the section determination unit 13 determines whether or not there is a non-lane section. In a case where there is a non-lane section, the section determination unit 13 proceeds to Step S104. In a case where there is no non-lane section, the section determination unit 13 proceeds to Step S101.

In Step S104, the path generation unit 11 calculates a plurality of lane links in the non-lane section. Specifically, the path generation unit 11 calculates a plurality of lane links connecting each lane L of one lane section located behind in the traveling direction of the vehicle 1 with respect to the non-lane section and each lane L of the other lane section located ahead in the traveling direction of the vehicle 1 with respect to the non-lane section.

In Step S105, the path generation unit 11 calculates the number of intersections with another lane link in each of the plurality of calculated lane links, and specifies a lane link in which the calculated number of intersections is the smallest.

In Step S106, the path generation unit 11 generates the travel path 70 in the non-lane section in accordance with the lane link in which the number of intersections is the smallest. The generated travel path 70 is transmitted from the path transmission unit 15 to the automatic driving ECU 30. Thereafter, the processing illustrated in FIG. 4 is ended.

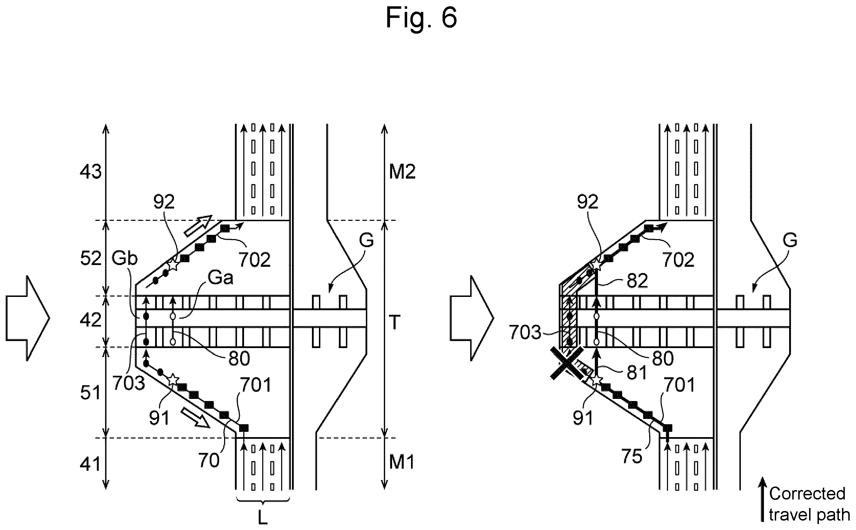

FIG. 5 is a diagram for describing an operation example of the path generation unit 11 and the section determination unit 13 in a case where the travel path 70 is generated in consideration of the automated gate Ga. FIG. 6 is a diagram for describing an operation example of the path generation unit 11 and the section determination unit 13 performed subsequently to FIG. 5.

As described above, in a case where the gate G includes the automated gate Ga and the non-automated gate Gb, the travel path 70 generated in accordance with the lane link in which the number of intersections is the smallest does not necessarily pass through the automated gate Ga. The path generation unit 11 can correct the travel path 70 generated in accordance with the lane link in which the number of intersections is the smallest, such that the travel path 70 passes through the automated gate Ga.

Specifically, first, the path generation unit 11 determines whether or not there is the automated gate Ga on the travel path 70 generated in accordance with the lane link in which the number of intersections is the smallest, based on the position information of the automated gate Ga stored in the gate position storage unit 14. In a case where there is the automated gate Ga on the travel path 70 generated in accordance with the lane link in which the number of intersections is the smallest, it is not necessary to correct the travel path 70.

As illustrated in FIG. 5, in a case where the automated gate Ga does not exist on the travel path 70 generated in accordance with the lane link in which the number of intersections is the smallest, an automated gate Ga closest to the lane link in which the number of intersections is the smallest is specified. Then, the path generation unit 11 specifies a lane 80 of the automated gate Ga closest to the lane link in which the number of intersections is the smallest.

Subsequently, the path generation unit 11 calculates a line segment 81 obtained by extending the specified lane 80 to the front side of the automated gate Ga and a line segment 82 obtained by extending the specified lane 80 to the opposite side of the automated gate Ga. For example, the path generation unit 11 calculates a line segment connecting start point coordinates located on the most front side of the automated gate Ga and start point adjacent coordinates adjacent to the start point coordinates ahead in the traveling direction of the vehicle 1 among a plurality of coordinates constituting the specified lane 80. Then, the path generation unit 11 can calculate a line segment 81 by extending the calculated line segment to the front side of the automated gate Ga. Similarly, for example, the path generation unit 11 calculates a line segment connecting end point coordinates located on the most opposite side of the automated gate Ga and end point adjacent coordinates adjacent to the end point coordinates behind in the traveling direction of the vehicle 1 among the plurality of coordinates constituting the specified lane 80. Then, the path generation unit 11 can calculate a line segment 82 by extending the calculated line segment to the opposite side of the automated gate **Ga.**

In the present embodiment, the lane 80 of the automated gate Ga closest to the lane link in which the number of intersections is the smallest and the line segment 81 and the line segment 82 obtained by calculating the lane 80 are collectively referred to as line segments 80 to 82 passing through the automated gate Ga closest to the lane link in which the number of intersections is the smallest.

Subsequently, the path generation unit 11 calculates a first intersection point 91 and a second intersection point 92 which are intersection points between the travel path 70 generated in accordance with the lane link in which the number of intersections is the smallest and the line segments 80 to 82 passing through the automated gate Ga closest to the lane link in which the number of intersections is the smallest. For example, the path generation unit 11 calculates, as a first intersection point 91, an intersection point between a travel path 701 of the first non-lane section 51 generated in accordance with the first lane link 61 in which the number of intersections is the smallest and the line segments 80 to 82 passing through the automated gate Ga closest to the first lane link 61. Then, the path generation unit 11 calculates, as a second intersection point 92, an intersection point between the line segments 80 to 82 and a travel path 702 of the second non-lane section 52 generated in accordance with the second lane link 62 in which the number of intersections is the smallest.

Subsequently, as illustrated in FIG. 6, the path generation unit 11 corrects the travel path 70 of the first non-lane section 51 and the travel path 70 of the second non-lane section 52 to pass through the automated gate Ga closest to the first lane link 61, the first intersection point 91, and the second intersection point 92. For example, the path generation unit 11 traces coordinates of a path 701 that is a portion of the travel path 70 in the first non-lane section 51 located on the front side of the first intersection point 91. The path generation unit 11 traces coordinates of a path 702 that is a portion of the travel path 70 in the second non-lane section 52 located on the opposite side from the second intersection point 92. The path generation unit 11 traces the coordinates of the line segments 80 to 82 connecting the first intersection point 91 and the second intersection point 92. The path generation unit 11 deletes the coordinates of a path 703 which is located between the first intersection point 91 and the second intersection point 92 and is a portion of the travel path 70 passing through the non-automated gate Gb. Then, the path generation unit 11 regenerates a travel path 75 passing through the coordinates of each of the traced path 701, the traced path 702, and the line segments 80 to 82. As a result, the path generation unit 11 can generate the travel path 75 corrected to pass through the automated gate Ga closest to the first lane link 61, the first intersection point 91, and the second intersection point 92.

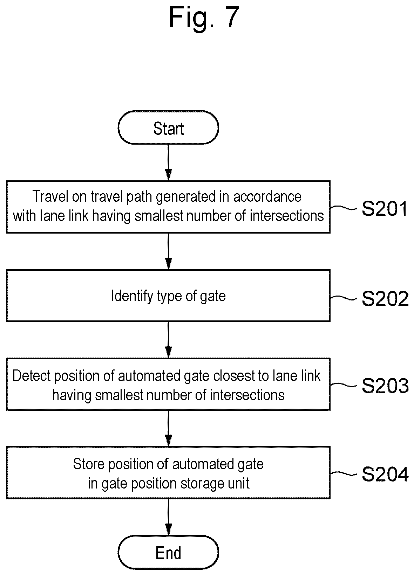

FIG. 7 is a flowchart illustrating processing of storing position information of the automated gate Ga.

In Step S201, the automatic driving ECU 30 travels on the travel path 70 generated in accordance with the lane link in which the number of intersections is the smallest.

In Step S202, the gate detection unit 21 identifies the type of the gate G from the image around the vehicle 1 acquired by the camera 20.

In Step S203, the gate detection unit 21 detects the position of the automated gate Ga closest to the lane link in which the number of intersections is the smallest, and transmits the position information of the automated gate Ga to the travel path generation device 10.

In Step S204, the gate position storage unit 14 stores the position information of the automated gate Ga closest to the lane link in which the number of intersections is the smallest in association with the map information. Thereafter, the processing illustrated in FIG. 7 is ended.

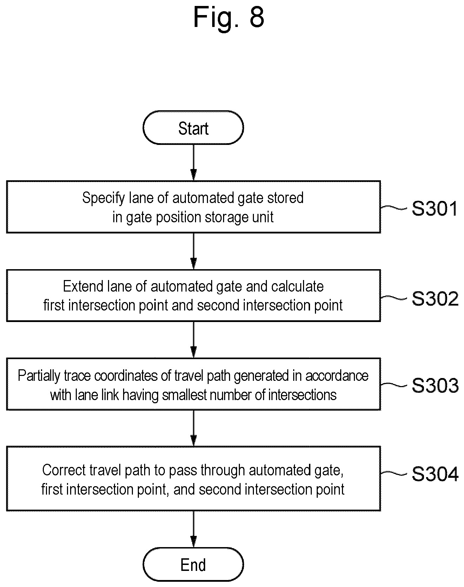

FIG. 8 is a flowchart illustrating correction processing of the travel path 70 in a case where the travel path 70 is generated in consideration of the automated gate Ga.

In Step S301, the path generation unit 11 specifies the lane 80 of the automated gate Ga from the position information of the automated gate Ga stored in the gate position storage unit 14.

In Step S302, the path generation unit 11 extends the lane 80 of the automated gate Ga to calculate the first intersection point 91 and the second intersection point 92.

In Step S303, the path generation unit 11 partially traces the coordinates of the travel path 70 generated in accordance with the lane link in which the number of intersections is the smallest. Specifically, the path generation unit 11 traces the coordinates of the path 701 located on the front side of the first intersection point 91, the coordinates of the path 702 located on the opposite side of the second intersection point 92, and the coordinates of the line segments 80 to 82 connecting the first intersection point 91 and the second intersection point 92.

In Step S304, the path generation unit 11 regenerates a travel path 75 passing through the coordinates of each of the traced path 701, the traced path 702, and the line segments 80 to 82. As a result, the path generation unit 11 can correct the travel path 70 to pass through the automated gate Ga closest to the lane link in which the number of intersections is the smallest, the first intersection point 91, and the second intersection point 92. Thereafter, the processing illustrated in FIG. 8 is ended.

As described above, the travel path generation device 10 in the present embodiment includes the map storage unit 12 that stores map information for distinguishing a plurality of lanes L in which the traveling direction of the vehicles 1 are the same, the section determination unit 13 that determines, based on the map information, a non-lane section which is a road section in which a plurality of lanes L are not divided and a lane section which is a road section in which a plurality of lanes L are divided, and the path generation unit 11 that generates the travel path of the vehicle 1. The section determination unit 13 determines one lane section, a non-lane section located ahead in a traveling direction of the vehicle 1 with respect to the one lane section, and another lane section located ahead in the traveling direction of the vehicle 1 with respect to the non-lane section. The path generation unit 11 calculates the number of intersections with other lane links in each of a plurality of lane links connecting each lane L of one lane section and each lane L of another lane section. The path generation unit 11 generates a travel path 70 in the non-lane section based on the calculated number of intersections.

As a result, the travel path generation device 10 in the present embodiment can uniformly generate a travel path having a low possibility of approaching other vehicles as a travel path in a non-lane section where a lane division line is not indicated. The travel path generation device 10 in the present embodiment can cause a vehicle control system that recognizes a lane division line and performs driving assistance, automatic driving, or the like to perform hands-off travel in a non-lane section. Thus, the travel path generation device 10 in the present embodiment can generate a safe travel path that enables hands-off travel in a non-lane section.

Further, in the travel path generation device 10 in the present embodiment, the path generation unit 11 generates the travel path 70 in the non-lane section in accordance with the lane link in which the calculated number of intersections is the smallest.

As a result, the travel path generation device 10 in the present embodiment can uniformly generate a travel path having the lowest possibility of approaching other vehicles as a travel path in the non-lane section. Thus, the travel path generation device 10 in the present embodiment can generate the safest travel path that enables hands-off travel in a non-lane section.

Furthermore, in the travel path generation device 10 in the present embodiment, in a case where a target lane on which the vehicle 1 is to travel in the other lane section is determined in advance in accordance with the destination of the vehicle 1, the path generation unit 11 generates the travel path 70 in the non-lane section in accordance with the lane link in which the number of intersections is the smallest among a plurality of lane links connecting each lane L of one of the lane sections and the target lane.

As a result, the travel path generation device 10 in the present embodiment can uniformly generate an efficient travel path having the lowest possibility of approaching another vehicle and adapted to the destination of the vehicle 1. Thus, the travel path generation device 10 in the present embodiment can generate a safe and efficient travel path that enables hands-off travel in a non-lane section.

The travel path generation device 10 in the present embodiment further includes the gate position storage unit 14 that stores the position information of the automated gate Ga in which the toll payment and the gate opening and closing operation are automated among the plurality of gates G installed in the tollgate T. The section determination unit 13 determines a plurality of gates G as one lane section or the other lane section. The path generation unit 11 generates the travel path 70 in the non-lane section based on the lane link in which the number of intersections is the smallest and the position information of the automated gate Ga closest to the lane link.

As a result, the travel path generation device 10 in the present embodiment can uniformly generate a travel path passing through the automated gate Ga having the lowest possibility of approaching another vehicle and not requiring time and effort of paying a fare. Thus, the travel path generation device 10 in the present embodiment can generate a safe and comfortable travel path that enables hands-off travel in a non-lane section.

Further, in the travel path generation device 10 in the present embodiment, the section determination unit 13 determines the first lane section 41, the first non-lane section 51 located ahead in the traveling direction of the vehicle 1 with respect to the first lane section 41, the second lane section 42 located ahead in the traveling direction of the vehicle 1 with respect to the first non-lane section 51, the second non-lane section 52 located ahead in the traveling direction of the vehicle 1 with respect to the second lane section 42, and the third lane section 43 located ahead in the traveling direction of the vehicle 1 with respect to the second non-lane section 52. The section determination unit 13 determines a plurality of gates G as the second lane section 42. The path generation unit 11 generates the travel path 70 in the first non-lane section 51 in accordance with the first lane link 61 in which the number of intersections is the smallest among a plurality of first lane links 61 connecting each lane L of the first lane section 41 and each of the plurality of gates **G.** The path generation unit 11 generates the travel path 70 in the second non-lane section 52 in accordance with the second lane link 62 in which the number of intersections is the smallest among a plurality of second lane links 62 connecting each lane L of the third lane section 43 and each of the plurality of gates **G.** The path generation unit 11 calculates, as a first intersection point **91,** an intersection point between a travel path 70 of the first non-lane section 51 generated in accordance with the first lane link 61 in which the number of intersections is the smallest and the line segments 80 to 82 passing through the automated gate Ga closest to the first lane link 61. The path generation unit 11 calculates, as a second intersection point 92, an intersection point between the line segments 80 to 82 and a travel path 70 of the second non-lane section 52 generated in accordance with the second lane link 62 in which the number of intersections is the smallest. The path generation unit 11 corrects the travel path 70 in the first non-lane section 51 and the travel path 70 in the second non-lane section 52 to pass through the automated gate Ga closest to the first lane link 61, the first intersection point 91, and the second intersection point 92.

As a result, the travel path generation device 10 in the present embodiment can uniformly generate a travel path passing through the automated gate Ga having the lowest possibility of approaching another vehicle and not requiring time and effort of paying a fare with a relatively simple algorithm. Thus, the travel path generation device 10 in the present embodiment can easily generate a safe and comfortable travel path that enables hands-off travel in a non-lane section.

Further, the travel path generation device 10 in the present embodiment includes the map storage unit 12 that stores map information for distinguishing a plurality of lanes L in which the traveling direction of the vehicles 1 are the same, the section determination unit 13 that determines a non-lane section which is a road section in which a plurality of lanes L are not divided, based on the map information and the path generation unit 11 that generates the travel path of the vehicle 1. The path generation unit 11 generates the travel path 70 in the non-lane section to pass through the left end of the non-lane section in a case where a road including the non-lane section is left side traffic and to pass through the right end of the non-lane section in a case where the road is right side traffic.

As a result, the travel path generation device 10 in the present embodiment does not need to calculate the lane links and the number of intersections thereof in the non-lane section. Thus, the travel path generation device 10 in the present embodiment can uniformly generate a travel path having a low possibility of approaching another vehicle in a relatively short time. Thus, the travel path generation device 10 in the present embodiment can easily generate a safe travel path that enables hands-off travel in a non-lane section.

Note that the present invention is not limited to the above embodiment, and includes various modifications. For example, the above-described embodiment has been described in detail for easy understanding of the present invention, and is not necessarily limited to those having all the described configurations. In addition, a part of the configuration of a certain embodiment can be replaced with the configuration of another embodiment, and the configuration of another embodiment can be added to the configuration of a certain embodiment. In addition, a part of the configuration of each embodiment can be added, deleted, and replaced to, from, and with other configurations.

In addition, some or all of the above-described components, functions, processing units, processing means, and the like may be realized by hardware, for example, by designing with an integrated circuit. In addition, each of the above-described components, functions, and the like may be realized by software by a processor interpreting and executing a program for realizing each function. Information such as a program, a tape, and a file for realizing each function can be stored in a recording device such as a memory, a hard disk, and a solid state drive (SSD), or a recording medium such as an IC card, an SD card, and a DVD.

In addition, the control lines and the information lines indicate what is considered to be necessary for the description, and do not necessarily indicate all the control lines and the information lines on the product. In practice, it may be considered that almost all the components are connected to each other.

### Reference Signs List

- 1: vehicle
- 10: travel path generation device
- 11: path generation unit
- 12: map storage unit
- 13: section determination unit
- 14: gate position storage unit
- 41: first lane section
- 42: second lane section
- 43: third lane section
- 51: first non-lane section
- 52: second non-lane section
- 61: first lane link
- 62: second lane link
- 70: travel path
- 80 to 82: line segment passing through closest automated gate
- 91: first intersection point
- 92: second intersection point
- T: toll
- L: lane
- G: gate
- Ga: automated gate
- Gb: non-automated gate

## Claims

1. A travel path generation device comprising:
a map storage unit that stores map information for distinguishing a plurality of lanes in which traveling directions of vehicles are the same;
a section determination unit that determines, based on the map information, a non-lane section that is a road section in which the plurality of lanes are not divided and a lane section that is a road section in which the plurality of lanes are divided; and
a path generation unit that generates a travel path of the vehicle,
wherein the section determination unit determines one lane section, the non-lane section located ahead in a traveling direction with respect to the one lane section, and another lane section located ahead in the traveling direction with respect to the non-lane section, and
the path generation unit
calculates the number of intersections with other lane links in each of a plurality of lane links connecting each lane of the one lane section and each lane of the other lane section, and
generates the travel path in the non-lane section based on the calculated number of intersections.

2. The travel path generation device according to claim 1, wherein the path generation unit generates the travel path in the non-lane section in accordance with a lane link in which the calculated number of intersections is the smallest.

3. The travel path generation device according to claim 2, wherein, in a case where a target lane on which the vehicle is to travel in the other lane section is determined in advance in accordance with a destination of the vehicle, the path generation unit generates the travel path in the non-lane section in accordance with the lane link in which the number of intersections is the smallest among a plurality of lane links connecting each lane of the one lane section and the target lane.

4. The travel path generation device according to claim 2, further comprising a gate position storage unit that stores position information of an automated gate in which a toll payment and a gate opening/closing operation are automated among a plurality of gates installed in a tollgate,
wherein the section determination unit determines the plurality of gates as the one lane section or the other lane section, and
the path generation unit generates the travel path in the non-lane section based on the lane link in which the number of intersections is smallest and position information of the automated gate closest to the lane link.

5. The travel path generation device according to claim 4, wherein
the section determination unit
determines a first lane section, a first non-lane section located ahead in the traveling direction with respect to the first lane section, a second lane section located ahead in the traveling direction with respect to the first non-lane section, a second non-lane section located ahead in the traveling direction with respect to the second lane section, and a third lane section located ahead in the traveling direction with respect to the second non-lane section, and
determines the plurality of gates as the second lane section, and
the path generation unit
generates the travel path in the first non-lane section in accordance with a first lane link in which the number of intersections is the smallest among a plurality of first lane links connecting each lane of the first lane section and each of the plurality of gates,
generates the travel path in the second non-lane section in accordance with a second lane link in which the number of intersections is the smallest among a plurality of second lane links connecting each lane of the third lane section and each of the plurality of gates,
calculates, as a first intersection point, an intersection point between the travel path of the first non-lane section generated in accordance with the first lane link in which the number of intersections is the smallest and a line segment passing through the automated gate closest to the first lane link,
calculates, as a second intersection point, an intersection point between the line segment and the travel path of the second non-lane section generated in accordance with the second lane link in which the number of intersections is the smallest, and
corrects the travel path in the first non-lane section and the travel path in the second non-lane section to pass through the automated gate closest to the first lane link, the first intersection point, and the second intersection point.

6. A travel path generation device comprising:
a map storage unit that stores map information for distinguishing a plurality of lanes in which traveling directions of vehicles are the same;
a section determination unit that determines a non-lane section based on the map information, the non-lane section being a road section in which the plurality of lanes are not divided; and
a path generation unit that generates a travel path of the vehicle,
wherein the path generation unit generates the travel path in the non-lane section to pass through a left end of the non-lane section in a case where a road including the non-lane section is left side traffic and to pass through a right end of the non-lane section in a case where the road is right side traffic.
